Europäisches Patentamt

European Patent Office

Office européen des brevets

(11) Publication number: **0 105 213**

**B1**

(12) **EUROPEAN PATENT SPECIFICATION**

(45) Date of publication of patent specification: 13.06.90 (51) Int. Cl.⁵: **H 04 N 5/92**

(21) Application number: 83108739.0

(22) Date of filing: 05.09.83

(54) Electronic still picture photography system.

(30) Priority: 06.09.82 JP 153883/82

(43) Date of publication of application:
11.04.84 Bulletin 84/15

(45) Publication of the grant of the patent:
13.06.90 Bulletin 90/24

(84) Designated Contracting States:
DE FR GB IT NL

(56) References cited:
DE-A-3 039 902
DE-A-3 042 274       US-A-3 456 071
GB-A-2 054 315       US-A-3 524 012
GB-A-2 090 503       US-A-3 551 591
JP-A-57 048 881       US-A-4 163 256

RESEARCH DISCLOSURE, no. 186, October
1979, pages 568-570, disclosure no. 18531,
Havant, GB; D.G. HOWE et al.: "Document
storage on a video disc"

PATENTS ABSTRACTS OF JAPAN, vol. 6, no.
155 (E-125)1033r, 17th August 1982 & JP-A-57 78
286

(73) Proprietor: **HITACHI, LTD.**
**6, Kanda Surugadai 4-chome Chiyoda-ku
Tokyo (JP)**

(72) Inventor: **Hanma, Kentaro
Taishodanchi 3-4-504 241-79, Fukayacho
Totsuka-ku Yokohama (JP)**
Inventor: **Todaka, Yoshihiro
Hitachi-Fujimiryo 1545, Yoshidacho
Totsuka-ku Yokohama (JP)**

(74) Representative: **Altenburg, Udo, Dipl.-Phys.
et al
Patent- und Rechtsanwälte Bardehle-
Pagenberg-Dost-Altenburg & Partner Postfach
86 06 20
D-8000 München 86 (DE)**

Courier Press, Leamington Spa, England.

**Description**

The present invention relates to a recording-and-reproduction system for recording a picture signal on a flexible magnetic disc and reproducing the signal, or more in particular to a magnetic recording-and-reproduction system for recording and reproducing a still picture, namely, an electronic still picture photography system.

An electronic photographic system is described in the document GB-A-2 090 503. This system has means for capturing and storing picture information in digital form in a memory. The picture information is stored as separate frames, each frame having an associated frame identity record. The frame identity record includes date, and may include frame number and technical information relating to the taking of the picture. There is also room on the frame identity record for the input of additional indexing information from a key board, so that frames on particular subjects can be recalled as required.

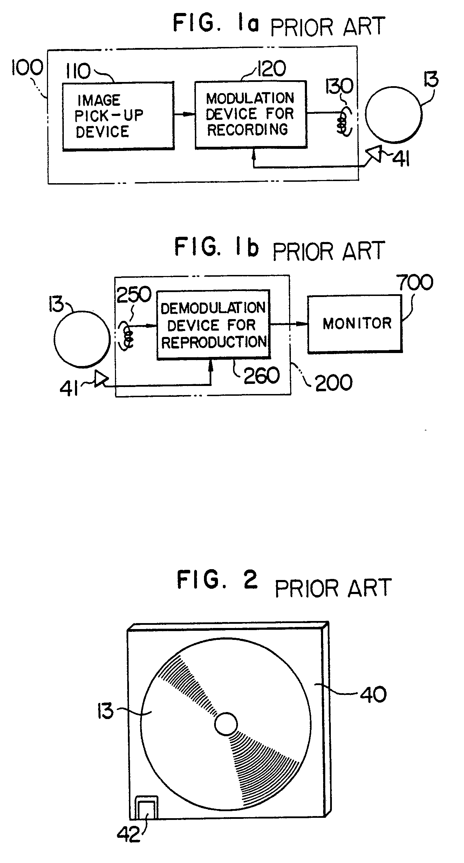

In recent years, an electronic still picture camera comprising a combination of a video camera and a recording device using a magnetic disc has been closely watched. Such an electronic camera is disclosed in U.S. Patent US-A-4,163,256 entitled "Electronic Photography System" invented by Willis A. Adcock. The electronic still picture camera comprises a magnetic disc several centimeters in diameter which is adapted to rotate at the rate of 3600 rpm. Several tens of independent magnetic tracks are formed radially on the magnetic disc, and a field signal is recorded on each track. In recording a multiplicity of pictures on the magnetic disc, one track is assigned to one photographic operation, so that field pictures unrelated to each other are recorded on the respective tracks. In reproduction mode, the field pictures recorded on the respective tracks are reproduced continuously. The pictures thus reproduced, which are field pictures, are not desirably high in quality. If a picture high in quality is to be recorded and reproduced, two tracks are assigned to one photographic operation. A first field picture is recorded on one of the tracks, and then a second field picture succeeding to the first field picture is recorded on the other track, so that one frame picture is recorded on the pair of tracks. For reproduction, on the other hand, the signals recorded on the two tracks are read alternately for each field cycle thereby to attain interlace playback of the raster scanned on the face plate of the picture tube. In this way, a high-quality picture is reproduced with an improved vertical resolution of the reproduced picture. The user of the electronic still picture camera selects one or the other of the above-mentioned conditions of recording/reproduction. In view of the fact that the users of the electronic camera are mainly the general consumers, operation thereof is required to be both simple and reliable. A conventional example of the operation for selecting the field or frame picture will be explained with reference to Figs. 1a, 1b and 2. Fig. 1a is a block diagram showing a construction of an electronic still picture camera, and Fig. 2 is a diagram showing a construction of a cassette for containing a magnetic disc. In Fig. 1a, an electronic camera 100 includes a video camera circuit or the like. The video signal is picked up by an image pick-up device 110 and then converted by a modulation device for recording 120 into a signal which is suitable for being recorded on the magnetic disc. The converted signal is applied to a recording head 130 thereby to be recorded on the magnetic disc 13. The picture image recorded on the magnetic disc 13 is read out of the magnetic disc 13 by a reproduction head 250 of a reproduction device 200, and is reproduced into a picture signal at a demodulation device for reproduction 260 thereby to be displayed as a still picture on the screen of a monitor 700. The magnetic disc 13 is contained in a cassette 40 as shown in Fig. 2, which cassette 40 includes a lug 42. It is assumed that when the lug 42 is not torn off (hereinafter referred to as presence of the lug 42), the frame picture is recorded, and when the lug 42 is torn off (hereinafter referred to as absence of the lug 42), the field picture is recorded. A detector 41 structurally built in the electronic camera 100 detects the presence or absence of the lug 42 of the inserted cassette 40. The internal condition of the modulation device for recording 120 is changed over in response to the presence or absence of the lug, thus selectively recording the field picture or frame picture. A detector 41 of the reproduction device 200 also detects the presence or absence of the lug 42 of the cassette 40, so that the internal condition of a demodulation device for reproduction 260 is changed over, thus effecting proper reproduction of the field picture or frame picture, whichever is recorded. As a result, a normal picture is reproduced on the monitor 700.

The advantages of the above-mentioned system are that the operation thereof is easy, and that the field picture or frame picture can be recorded or reproduced accurately. In spite of the foregoing advantages, the system has the following disadvantages:

(Disadvantage 1) Either the field picture or frame picture must be selected for recording only for each cassette. In other words, it is impossible to meet such demand that the field picture and the frame picture can be selectively recorded in the same cassette each time of photographic operation.

(Disadvantage 2) The cassette in which the lug has been torned off finds application only for recording the field picture. Specifically, in spite of such an advantage of magnetic recording that a signal can be easily erased for subsequent reuse of the magnetic disc, the torn-off lug cannot be restored so that subsequent signal recording, if any, is possible only for the field picture and therefore the advantage of magnetic recording cannot be made the best use of.

The present invention will be apparent from the following detailed description taken in conjunction with the accompanying drawings, in which:

Figs. 1a and 1b show a block diagram for illustrating a basic construction of a conventional still picture camera;

Fig. 2 shows an appearance of a cassette used for an electronic camera;

Fig. 3 shows a block diagram for illustrating a first embodiment of the electronic camera according to the present invention;

Figs. 4 and 5 show diagrams for illustrating the construction block diagram of Fig. 3;

Fig. 6 shows waveforms for illustrating a first example of digital code signals according to the present invention;

Fig. 7 is a diagram showing waveforms in spectral distribution of signals recorded and reproduced in multiple way, plotted against frequency, of an electronic still picture camera according to the present invention;

Figs. 8 and 9 show waveforms for illustrating a second and a third example of digital code signals, respectively;

Fig 10 shows a block diagram for illustrating an embodiment of the control circuit of the first embodiment according to the present invention which is provided with a microcomputer;

Figs. 11, 12 and 13 are flowcharts for illustrating the operation of the control circuit;

Fig. 14 shows a block diagram for illustrating a code signal generator circuit;

Fig. 15 shows a block diagram for illustrating a code signal reproduction circuit;

Fig. 16 shows a block diagram for illustrating a second embodiment of an electronic still picture camera according to the present invention;

Fig. 17 is a table for explaining the effect of the construction block diagram of Fig. 16; and

Fig. 18 shows a block diagram for illustrating a third embodiment of the present invention.

The object of the present invention is to provide an electronic still picture camera system having a superior operability and functions.

According to the present invention, in order to achieve the above-mentioned object, digital code signals are recorded and reproduced in multiplication with a picture signal. The information contained in the digital code signals include (1) whether a picture recorded is a field picture or a frame picture, (2) the track number of the magnetic disc, and (3) data and time of recording or other data related to the recorded picture.

According to the present invention, the information carried by the digital code signals relates to the recorded pictures and therefore is recorded in frequency-multiplication by such means as magnetic recording with use of the picture signal as a bias signal.

In particular, according to the present invention, a clock period of the digital code signals is synchronized with either the horizontal sync signal or vertical sync signal of the picture signal so that the circuits for framing operation and the clock signal which normally complicate the digital signal transmission system, are extremely simplified. More in detail, a single or plural carrier waves are digitally added in predetermined sequence to the frequency outside or substantially outside of the luminance signal band or chrominance signal band of the picture, so that digital code signals are recorded in multiplication with the picture signal in the form of a digital signal. The period of such a digital signal is determined to be in synchronism with the horizontal sync signal of the picture signal, and the digital code signals are inserted along the time axis at a position determined on the basis of the vertical sync signal of the picture.

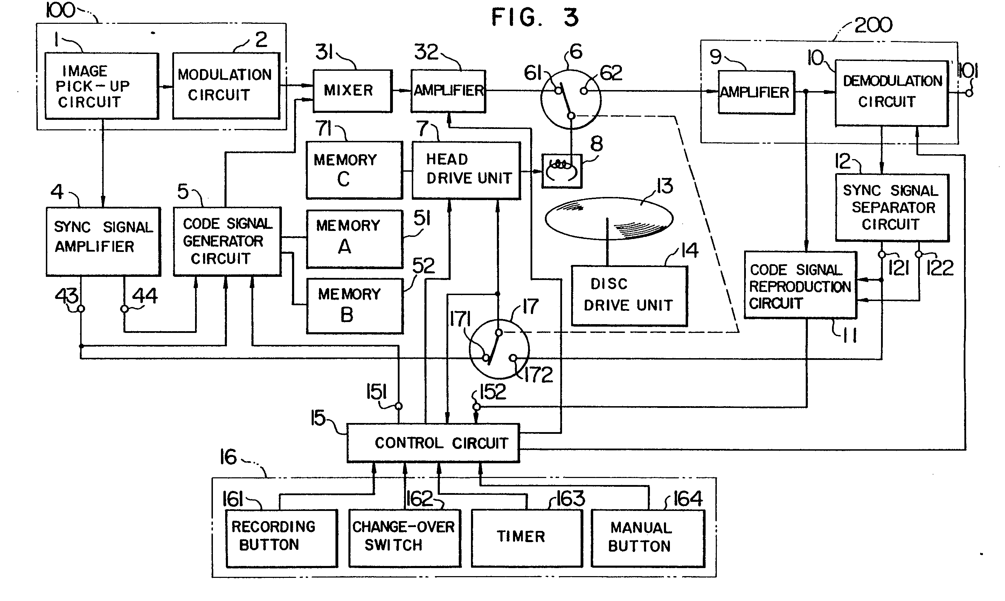

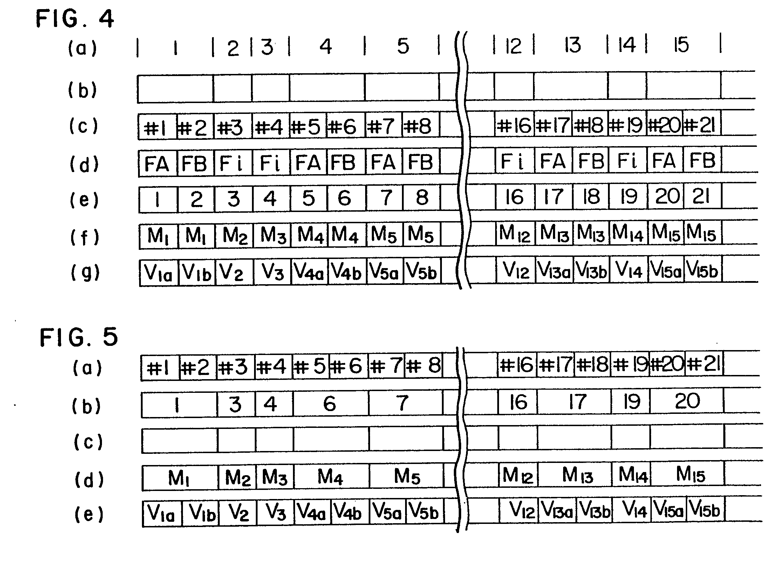

A block diagram showing a construction of an electronic still picture camera comprising a device for multiple recording and reproduction of digital code signals according to the present invention is shown in Fig. 3, and a diagram for explaining the operation of the still picture camera of the construction of Fig. 3 is shown in Figs. 4 and 5. In Fig. 3, reference numeral 1 designates an image pick-up circuit such as a video camera normally including an optical-electronic transducer for converting an optical signal obtained through a lens (not shown) and a shutter (not shown) into an electrical signal. Numeral 2 designates a modulation circuit for modulating a picture signal obtained from the image pick-up circuit 1 into a form recordable on a magnetic disc. Numeral 31 designates a mixer, numeral 32 a recording amplifier for amplifying the modulated signal, numeral 4 a sync signal amplifier circuit for amplifying the horizontal sync signal and the vertical sync signal supplied thereto from the image pick-up circuit 1 and applying the amplified signals to other circuits. Numeral 5 designates a code signal generator circuit for generating a modulated digital code signal in synchronism with the sync signals, numeral 6 a switch for changing over the head connection between recording and reproduction, numeral 7 a head drive unit for moving the heat to select a required track, numeral 8 a head driven by the head drive unit 7 for recording signals on the track or reproducing the recorded signals therefrom, numeral 9 a reproduction amplifier circuit for amplifying the output signal read out at the head 8, and numeral 10 a demodulation circuit for demodulating the picture signal amplified at the reproduction amplifier 9. Numeral 11 designates a code signal reproduction circuit for reproducing digital code signals from the signals read out at the head 8 numeral 12 a sync signal separator circuit for separating the horizontal sync signal and the vertical sync signal which are supplied from the demodulator circuit 10, numeral 13 a magnetic disc, numeral 14 a disc drive unit for rotating the magnetic disc 13, numeral 15 a control circuit for controlling such operations as generation, processing or display of the digital code signals, numeral 16 a mode input unit including a recording button 161, a field/frame change-over switch 162, a timer 163, and a manual button 164. Numeral 17 designates a switch for changing over the sync signals at recording or reproduction to the control circuit 15, numeral 101 a picture signal output terminal which is connected to a visual still picture display (not shown) through a visual display interface (not shown). Numerals 43, 121 designate vertical sync signal output terminals, numerals 44, 122 horizontal signal output terminals, numerals 61, 62, 171, 172 switch terminals, numerals 151, 152 terminals, numerals 51, 52, 71 memory A, memory B and memory C respectively. In this drawing, in response to the operation of the recording button 161, the picture signal taken at the image pick-up circuit 1 is applied to the modulation circuit 2 for FM mode modulation, and is recorded on the magnetic disc 13 through the mixer 31, recording amplifier 32, switch 6 and head 8. In reproduction mode, on the other hand, the signal recorded on the magnetic disc 13 is read out by the head 8 and is applied via the reproduction amplifier 9 to the demodulation circuit 10 for reproduction, followed by being produced at the picture output terminal 101. The amplifier 32 is supplied with a gate pulse from the control circuit 15, so that only the picture signal for one frame or one field is supplied to the magnetic head 8 by gating. This circuit, which is well known, is similar to the magnetic recording system of a video tape recorder (VTR) and therefore will not be explained in detail again herein. In the construction of Fig. 3, when a picture signal is recorded on the magnetic disc 13, the signal applied from the input device 16 to the code signal generator circuit 5 through the control circuit 15 combines with the sync signal supplied from the sync signal amplifier circuit 4 to the code signal generator circuit 5 thereby to produce a digital code signal in synchronism with the sync signal at the code signal generator circuit 5, which thus generates a modulation wave modulated by the code signal thus synchronized. The modulated wave is applied to the mixer 31 where it is mixed with the picture signal, and through the recording amplifier 32 and the head 8, is recorded on the magnetic disc 13 in multiplication with the picture signal. The digital code signal applied from the control circuit 15 to the code signal generator circuit 5 is stored in the memory A 51 and the memory B 52. Before multiple signal recording, the head drive unit 7 of course drives the head 8 thereby to select a required track in compliance with the order from the control circuit 15. The signal supplied from the control circuit 15 to the head drive unit 7 is stored in a memory. In reproduction mode, the digital code signal reproduced at the code signal reproduction circuit 11 through the head 8 and the reproduction amplifier 9, the signal supplied from the sync signal separator circuit 12, and the signal supplied from the manual button 164 are used by the control circuit 15 to apply a signal to the head drive unit 7, so that the head 8 is driven to select a required track.

First, the recording operation will be explained with reference to Fig. 4. Fig. 4(a) represents the operating frequency of the recording button 161 in terms of the number of recording operations or the recording number of a photographed scene. Fig. 4(b) indicates the field picture recording or frame picture recording selected by the field/frame changeover switch 162. The recording conditions determined by the user are thus provided by Figs. 4(a) and 4(b). Fig. 4(c) shows the recording track numbers set in advance on the magnetic disc 13. A picture of one field is recordable in each recording track. Although actual recording tracks are arranged regularly in a circle on the magnetic disc 13, the track in the drawing are arranged straight from left to right for facilitating the understanding. The partitions in Figs. 4(a) and 4(b) described above correspond to the recording tracks. When the frame picture is selected by the field/frame change-over switch 162 and the recording button 161 is turned on, the picture signal and the digital code signal are recorded on the first and second tracks respectively. Figs. 4(d), 4(e), 4(f) and 4(g) show data recorded in superimposition on the corresponding tracks and represent the frame or field picture, track number, other data related to the photographed picture, and the photographed picture signal respectively. Among them, the data represented by (d), (e) and (f) are recorded as digital code signals. More specifically, in Fig. 4(d), the symbol FA designates data on the first field picture making up a frame picture, and symbol FB data on the second field picture. By alternately reproducing the signals such as $V_{1e}$ and $V_{1b}$ recorded in sequence in association with the signals FA and FB, for instance, a still frame picture of high quality is obtained. Symbol Fi represents a field picture recording. In response to the signal Fi, the signal $V_2$ recorded on the same track, for instance, the third track, is repeatedly reproduced thereby to produce a still field picture half in vertical resolution. Fig. 4(e) shows numerals corresponding to the respective recording track numbers. A signal of a given one of the numerals is reproduced to identify the track number when the head 8 scans the track. Fig. 4(f) shows data related to the photographed picture, that is, data on date or time applied from the input device 163, which data are indicated by M1, M2, M3 and so on in accordance with the number of depressions of the recording button. In frame picture recording, the same signal is recorded for the first and second fields. The first field is odd-numbered.

Assume that as shown in Figs. 4(a) and 4(b), the frame picture recording is selected by the field/frame change-over switch 162 for the first picture photography and recording, thus turning on the recording button 161. The control circuit 15 activates the head drive unit 7 for the head 8 so that the head 8 is moved to the first track of the magnetic disc 13. Upon rotation of the magnetic disc 13, the signal FA representing the first field picture of the frame picture, the track number "1", the digital code signal MI and the first field signal $V_{1a}$ of the photographed picture respectively shown in Figs. 4(d), 4(e), 4(f) and 4(g) are recorded on the magnetic disc 13. Then, in synchronism with the vertical sync signal, the head 8 is moved to the second track on the magnetic disc 13 thereby to record the signal FB representing the second field of the frame recorded picture, the track number "2", the time signal M1 and the second field signal $V_{1b}$ as shown in Figs. 4(d), 4(e), 4(f) and 4(g) on the second-track. In the next photographic and recording operation, assume that as shown in Fig. 4(b), the field recording is selected by the field/frame change-over switch 162 and the recording button 161 is turned on. The control circuit 15 activates the head drive unit 7, so that the head 8 is moved to the third track which is unrecorded (Fig. 4(c)) thereby to record the signal Fi representing the field recorded picture, track number " 3", time signal M2 and the field signal $V_2$ shown in Figs. 4(d), 4(e), 4(f) and 4(g) respectively on the third track. In similar fashion, by the operation of the field/frame change-over switch 162, a pair of tracks is used for recording a high-quality frame picture recording, while one track is employed for field picture recording, with the result that a multiplicity of signals are recorded sequentially.

Data on movement or stoppage of the head 8 corresponding to the signals FA, FB and Fi are stored in the memory 71.

Now, the reproduction operation will be explained with reference to Fig. 5. The numbers of the tracks arranged on the magnetic disc 13 are shown in Fig. 5(a), and are the same as the tracks of the track numbers in Fig. 4(c). In reproduction mode, the head 8 scans the tracks recorded with the signals of Figs. 4(d), 4(e), 4(f) and 4(g). The signals thus picked up are applied from the terminal 62 of the switch 6, through the reproduction amplifier 9, to the code signal reproduction circuit 11 and the demodulation circuit 10 thereby to reproduce the recorded code signals. Assume that the manual button 164 of the input device 16 orders the reproduction of the first track and the reproduction operation is started. First, the control circuit 15 supplies a signal to the head drive unit 7, thus moving the head 8 to the first track. The signal obtained by the head 8 is supplied through the reproduction amplifier 9 to the code signal reproduction circuit 11. In response to the code signal being supplied from the code signal reproduction circuit 11 to the control circuit 15, the control circuit 15 detects that the head 8 is tracking the first track. The control circuit 15 holds the head 8 on the first track, and the head 8 continues to trace the same track. Upon detection of the signal FA indicating the first field of the frame picture after reproduction of the signal $V_{1a}$, the control circuit 15 supplies a signal to the head drive unit 7, so that the head 8 is moved from the first track to second track in synchronism with the vertical sync signal supplied from the vertical sync signal output terminal 121, thus reproducing signals FB and $V_{1b}$. Upon detection of the signal FB, the head 8 is again moved to the first track. As a result, the first and second tracks are alternately scanned for alternate demodulation of the first and second field pictures, thus producing a frame picture at the output terminal 101. Also, the data as shown in Figs. 5(b), 5(c) and 5(d), that is, the track number indicating that the first field signal is reproduced from the first track, the data indicating the frame picture reproduction and data or time of data M1, may be displayed on a display unit (not shown) when required.

Assuming that transfer to the reproduction of the next picture is ordered by operation of the manual button 164 when the frame picture being reproduced by tracing of the first and second tracks, the control circuit 15 moves the head 8 to the third track. The signal obtained from the head 8 is supplied to the code signal reproduction circuit 11, and after confirming right tracing of the third track by the output of the code signal reproduction circuit 11, the tracing is continued. Upon detection of a digital reproduction code signal Fi by the control circuit 15, the head 8 is held on the third track for continuous reproduction of the field picture $V_2$ as shown in Fig. 5(e). At the same time, if required, the track number "3" where reproduction is going on, the data indicating the field picture, and data or time as shown in Figs. 5(b), 5(c) and 5(d) respectively are displayed on a display unit (not shown). It will be understood readily that by repeating this process, the recorded pictures may be reproduced in the order of photography.

Reference will be made to the case in which a track number is designated for reproduction. When the 16th or 17th track is directly designated, for example, the operation as mentioned above is performed. In the case where the 18th track is designated directly, on the other hand, the scanning of the 18th track produces a digital code signal FB indicating the second field of the frame picture. The 18th track and the 17th track or the track of the next lower number are known to make up a pair of fields. By reproducing them alternately, a still frame picture comprising first and second field pictures is reproduced. It is of course possible, if required, to display the track number "17" recorded with the first field, data on the frame picture, date and the like on a display unit (not shown).

When a signal is recorded in several parts on the magnetic disc, an order to initiate the recording at the input device 16 causes the control circuit 15 to perform the operations mentioned below. First, pictures are recorded in the first and subsequent unrecorded tracks in sequence, followed by the repetition of the above-mentioned operation, thus performing the recording and reproduction processes. A layout of the digital code signals on tracks is explained above.

Now, a code form of the digital code signals recorded on the tracks and the system of multiplication with a video or picture signal will be illustrated.

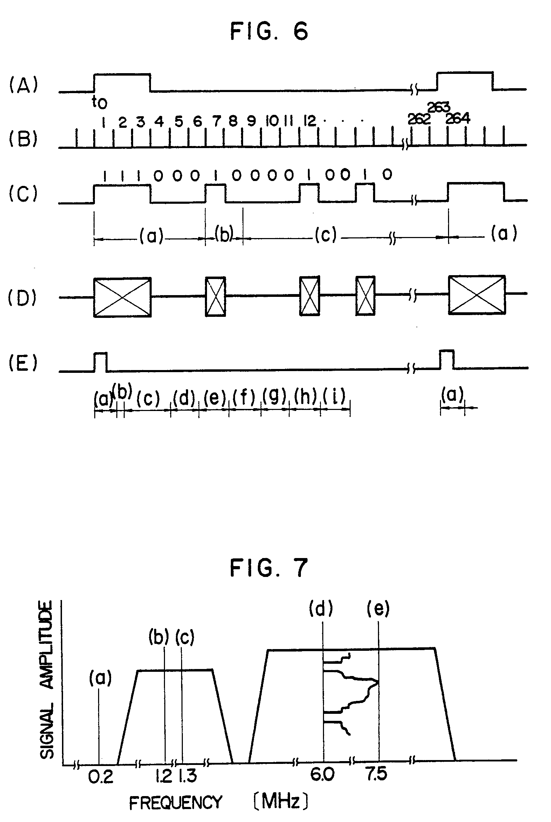

An embodiment of code form of the digital code signals is shown in Fig. 6. Figs. 6(A) and 6(B) show output waveforms produced at a sync signal supply circuit 4, which represent a vertical sync signal obtained at a vertical sync signal output terminal 43 and a horizontal sync signal obtained at a horizontal sync signal output terminal 44 respectively. For facilitating the understanding, the horizontal sync signals started immediately after the rise time $t_0$ of the vertical sync signal of Fig. 6(A), will be represented by the 1Hth, 2Hth, 3Hth ..... nHth, ....., 264Hth signal as indicated by the numerals in Fig. 6(B). Examples of data contained in the digital code signal include (a) reference signal indicating the magnitude of noise and signal at the time of demodulation, (b) data for identifying the first or second field picture of a frame, or a field picture, (c) the number of the track engaged in recording, (d) year, (e) month, (f) date, (g) time, (h) minutes, and (i) seconds. These data are allotted with 6 bits for (a), 2 bits for (b), 12 bits of binary-coded decimal numbers for (c), and 8 bits of binary-coded decimal numbers for (d), (e), (f), (g), (h) and (i) respectively, each bit representing one horizontal period. The digital code signal starts with, for example, the 1Hth signal, that is, the rise of the vertical sync signal. The code in the form of 11100010000 ..... is shown as an example in Fig. 6(C). The time axis of Fig. 6(C) is plotted on the same scale as Fig. 6(B), while Fig. 6(E) is drawn along a different time axis to indicate the entire arrangement of the digital code signals within a vertical period. The digital code signal modulated is shown in Fig. 6(D). This signal is obtained by the keying modulation system in which a carrier wave is supplied in accordance with the digital code signal. The frequency of the carrier wave is set to a level outside or considered substantially outside of the frequency band of the modulated picture signal produced from the modulation circuit 2. The mixing ratio between the output signals of the modulation circuit 2 and the code signal generator circuit 5 is determined at a level not to interfere with the reproduced image directly or by the non-linear distortion of the recording-reproduction system.

Fig. 7 shows a recording signal multiplied with the digital code signal along the frequency axis. The luminance signal for the photographed picture signal is a frequency-modulated wave of about 9 MHz in bandwidth having a white peak of 7.5 MHz as shown in (e) and the forward end of the sync signal of 6 MHz as shown in (d) of the drawing. The color or chrominance signal, on the other hand, is a frequency-modulated wave of about 2 MHz in the bandwidth of a color difference line sequential signal. The central frequency of the (R-Y) color difference signal is 1.2 MHz, and the central frequency of the (B-Y) color difference signal 1.3 MHz, which are respectively illustrated in Figs. 7(b) and 7(c). In this frequency arrangement, the carrier wave frequency of the digital code signal is desirably positioned lower than 300 KHz outside of the color signal bandwidth or a level proximate 2.5 MHz in the gap between color signal and luminance signal bandwidth, (an integral number + 1/2) times the horizontal sync signal frequency. This frequency is desirably interleaved in such a position. In the embodiment under consideration, a frequency about 204.5 KHz that is 13 times the frequency of the horizontal sync signal is selected (Fig. 7(a)). A mixing ratio in which the carrier frequency of the digital code signal is −30 to −40 dB smaller than the luminance signal level, will not cause any beat interference in the reproduced picture.

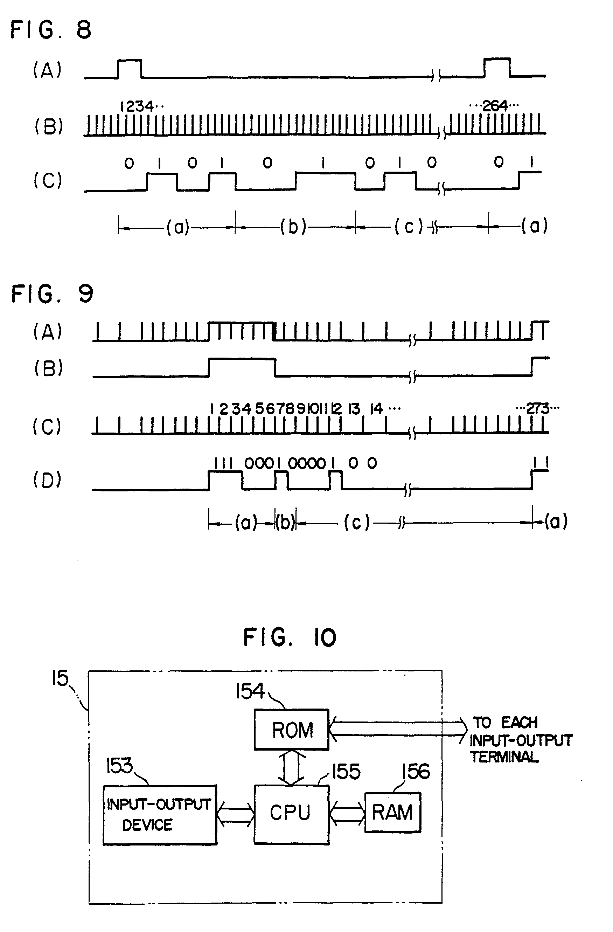

A second example of the digital code signal for modulating the carrier wave is shown in Fig. 8. Figs. 8(A) and 8(B) show exactly the same sync signals as Figs. 6(A) and 6(B). The data of signals (a), (b) and (c) in Fig. 8(C) contained in the digital code signal of the example under consideration are exactly the same as those explained with reference to Fig. 6(C) above, except that signals (d) to (i) are of 7 bits in binary digits. The signal (a) of Fig. 6(C), which is a reference signal, also functions as a timing pulse of 4 bits. Generally, with the decrease in the recording level of the carrier wave, the interference with the picture is reduced, and in order to prevent the S/N ratio of the reproduction code signal from being deteriorated, the time for each bit is lengthened so that the S/N ratio along time axis is improved, thus facilitating the demodulation. The data of signal (b) of Fig. 8(C) identifying a field or a frame picture is especially important and therefore is provided with the time of eight horizontal period is given for each bit, while the other data is provided with a time length of four horizontal periods for each bit. The digital code signal starts with the 1Hth signal for odd-numbered fields, and with the 264Hth signal of even-numbered fields. Since the time used for the data (a) to (i) is 248 horizontal periods in this example, the start of the digital code signal is delayed from the rise of the vertical sync signal. The effect of noise usually generated at the signal-shifting point of time during the vertical blanking period may thus be eliminated, though not shown.

A third example of the digital code signal is shown in Fig. 9. Unlike in the examples of Figs. 6 and 8 in which the horizontal sync signal is used as a reference signal for clock signal, a decoding sync signal is used as a reference signal for clock signal in the third example in view of the fact that a decoding sync signal is easily obtained at an ordinary sync separator circuit. The digital code signal is thus encoded by use of the decoding sync signal at the time of recording to facilitate the reproduction of the digital code signal. Fig. 9(A) shows a waveform of the decoding sync signal, Fig. 9(B) a waveform of the vertical sync signal, and Fig. 9(C) the decoding sync signal in the form of trigger pulses. The last-mentioned pulses are assumed to be clock signals and are numbered 1, 2, 3 and so forth sequentially from the rise of the vertical sync signal of odd-numbered fields. The digital pulse train of the digital code signal of Fig. 9(D) is an example of signals mentioned with reference to Fig. 6(C). If the start of the digital code signal of Fig. 9(D) is taken at or after the number 13 of Fig. 9(C), the train of modulated wave of the digital code signal assumes the same waveform as Fig. 6(D). When the clock signal according to the third example is used, the construction of the sync reproduction circuit 4 and sync separator circuit 12 in Figs. 1a and 1b is simplified, thereby reducing the production cost.

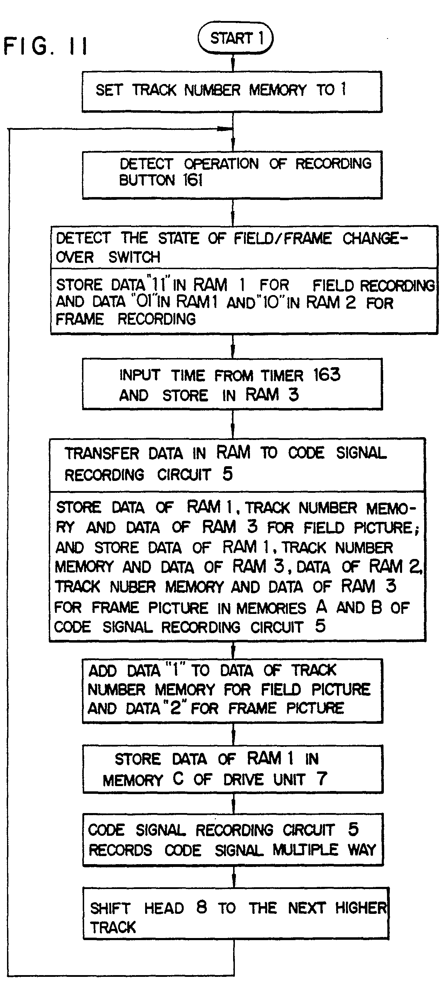

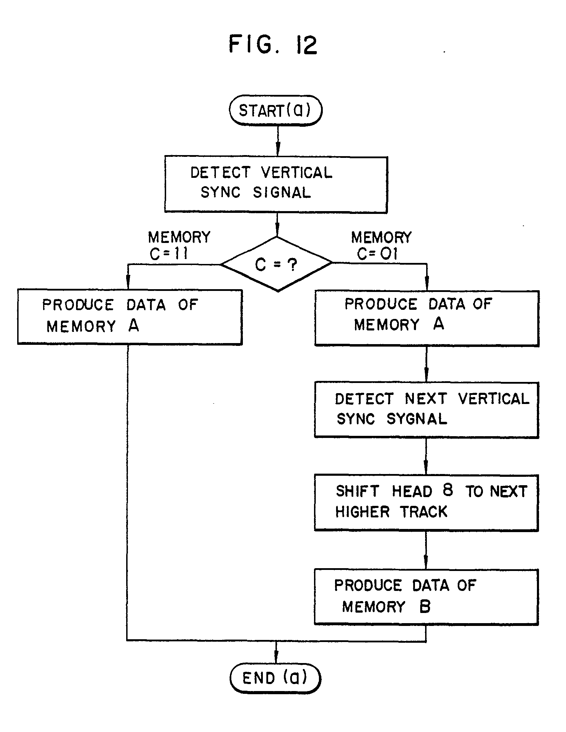

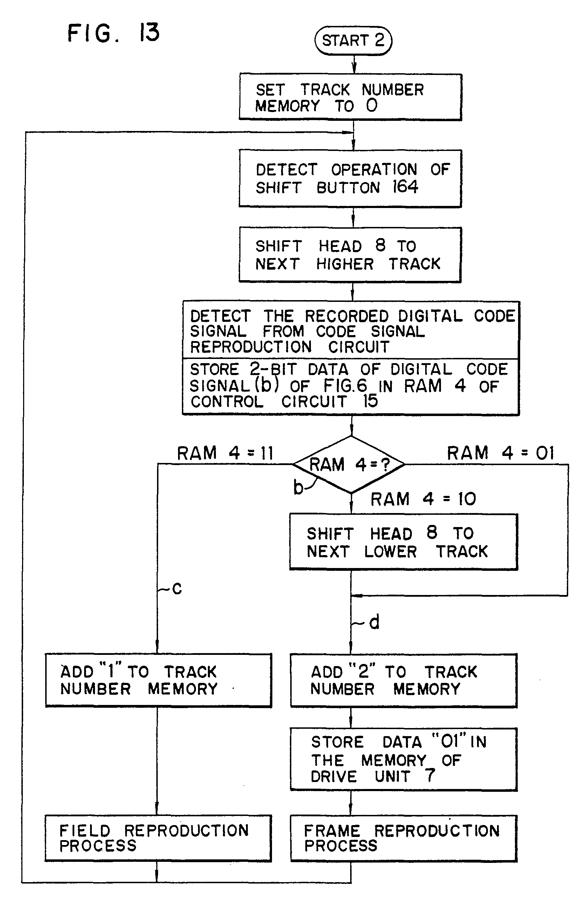

Fig. 10 shows an example of the control circuit 15 realized with microcomputer. In Fig. 10, numeral 153 designates an input-output device, numeral 154 a read-only memory (ROM) for storing programs, numeral 155 a central processing unit, and 156 a random access memory (RAM). A 4-bit or 8-bit one-chip or multi-chip microcomputer is used as this microcomputer. Figs. 11 to 13 show flowcharts of the programs stored in the ROM 154 of the microcomputer. The recording operation of the digital code signal is shown in Figs. 11 and 12, and the reproducing operation thereof in Fig. 13. First, the recording operation will be explained. Start 1 in Fig. 11 indicates the stage in which an unrecorded sheet is inserted. Each time a recording button 161 is depressed, the condition of the field/frame change-over switch 162 is detected through the input-output device 154. If the detected signal represents the field recording, data "11" is recorded in the memory area RAM secured in RAM 156, whereas if the frame recording is indicated, data "01" is recorded in RAM 1 and further data "10" in memory area RAM 2 (which is also secured in RAM 156 like memory area RAM 1), while at the same time transferring the data to the memory C 71 of the head drive unit 7. Then, the time data is obtained from the timer 163 and is applied from the input-output device 154 to the CPU 155, so that the time data is stored in the memory area RAM 3 secured in RAM 156. Next, the content of RAM 156 is transferred to the memory A 51 and memory B 52 of the code signal generator circuit 5, so that with the positive-going edge of the vertical sync signal as a trigger as shown in Fig. 12, and with the horizontal sync signal as a clock period, the data stored in the memory 51 and memory B 52 is frequency-multiplied with the picture signal and is recorded in the magnetic disc 13. The memory A 51, the memory B 52 and the memory C 71, which are connected to the code signal generator circuit 5 and the drive unit 7 respectively in the embodiment under consideration, may alternatively be integrated in the RAM 156 and ROM 154 of the microcomputer with the whole or part of the digital signal processing section of the head drive unit 7 and the code signal generator circuit 5.

The operation of the microcomputer in reproduction mode is shown in Fig. 13. By operating the manual button 164, the picture recorded in the magnetic disc 13 is normally reproduced. In the field reproduction processing or frame reproduction processing in Fig. 13, the control lines led from the control circuit 15 to the head drive unit 7 and the demodulation circuit 10 in Fig. 3 are controlled by microcomputer in such a way that in the case of field reproduction processing, for instance, the head 8 is kept stationary on the same track while a delay line having the delay time half the horizontal sync signal period is inserted or not inserted in the route of picture signal by the demodulation circuit 10 responsive to each vertical sync signal period reproduced at the sync separator circuit, thus avoiding what is called the skew in which a distortion occurs at the upper parts of the picture screen of a television monitor (not shown) connected to the terminal 101. This function is performed by supplying a signal from the control circuit 15 to the demodulation circuit 10 thereby to turn on and off a switch (not shown). The frame reproduction processing, on the other hand, indicates the operation in which instead of the above-mentioned delay operation by the demodulation circuit 10, the head drive unit 7 is controlled in response to each period of the vertical sync signal produced from the sync separator circuit 12 so that the head 8 changes the track as explained with reference to Figs. 3 to 5 for interlace reproduction.

The 2-bit data "11" is selected as the code Fi of Fig. 4(d) which the field/frame change-over switch 162 is set to field mode in the embodiment of Figs. 10 to 13; and the data "10" and data "01" are selected as the codes FA and FB of Fig. 4(d) when the switch stands at frame position, as mentioned above, for the reasons described later.

The code signal generator circuit 5 and the code signal reproduction circuit 11 connected to the control circuit 15 described above with reference to Figs. 10 to 13 are required at least to generate the signals shown in Figs. 6 to 8. In the case where the digital code signal takes the form of on-off keying modulation, for example, the code signal generator circuit 5 includes an oscillator adapted to oscillate mainly at the frequency shown in Fig. 7(a) and an electronic switch, so that the output of this oscillator is applied to the electronic switch in response to the digital code signal data produced at terminal 151, and the electronic switch operates in such a manner as to produce a waveform shown in Fig. 6 or Figs. 7 and 8 with reference to the sync signal applied to the terminals 43 and 44, thus generating a code signal. In this case, the code signal reproduction circuit 11 includes a combination of an amplifier and a bandpass filter, which extracts, amplifies and detects the digital code signal components contained in the output signal of the amplifier 9. The resulting base band signal is applied to the terminal 152.

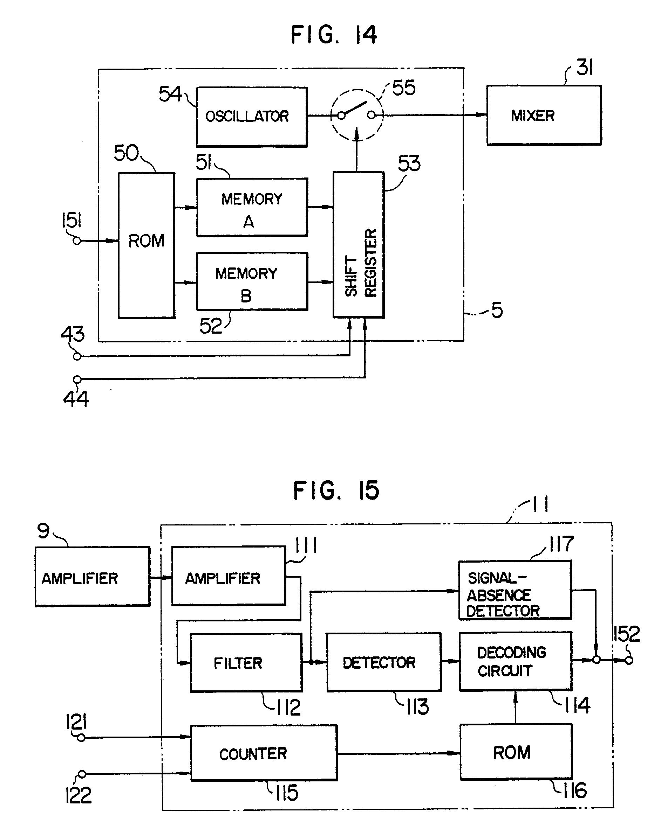

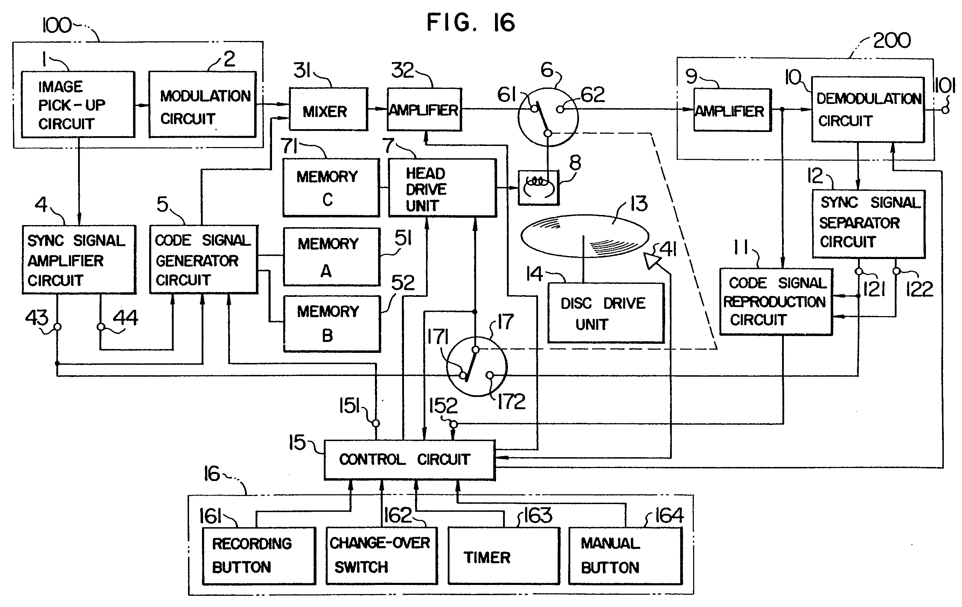

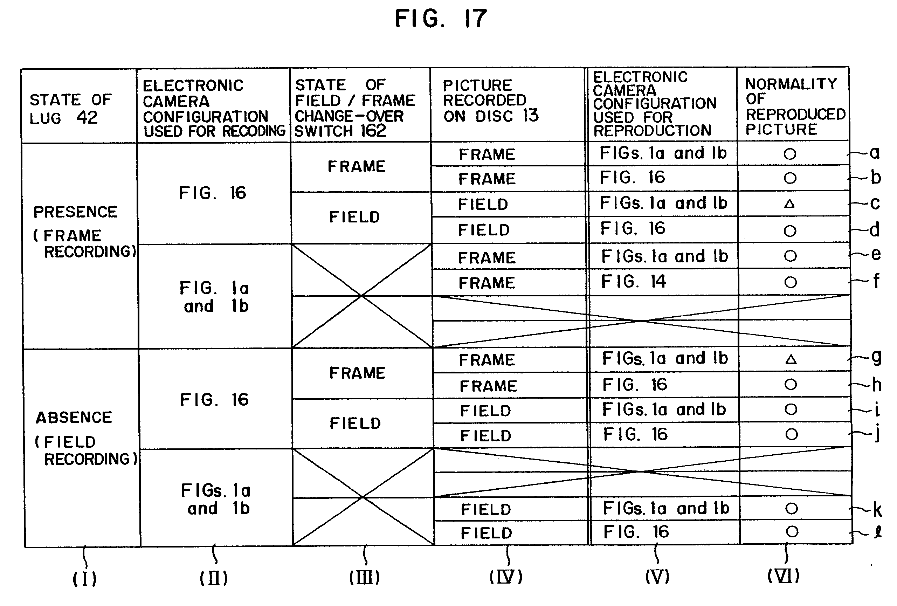

Still another embodiment of the code signal generator circuit and the code signal reproduction circuit is shown in Figs. 14 and 15 respectively. In Fig. 14, numeral 50 designates a read-only memory (ROM) for storing a code signal as a data in the address determined in accordance with the data applied to the terminal 151. The output data obtained from the ROM 50 is stored in the memory A 51 and the memory B 52. The data stored in the memory A 51 and memory A 52 are arranged on a shift register 53 in the time sequence in which the code signal is recorded in the magnetic disc 13, so that the electronic switch 55 is controlled in accordance with the vertical sync signal and horizontal sync signal applied to the terminals 43 and 44 respectively. Since the electronic switch 55 is supplied with an output signal of the oscillator 54 oscillating at the frequency shown in Fig. 7(a), a mixer 31 is supplied with a code signal waveform as shown in Fig. 6, Fig. 8 or Fig. 9, which signal is recorded in frequency multiplication with the picture signal on the magnetic disc 13. In the code signal generator circuit 5 shown in Fig. 14, the ROM 50 has the function of generating a code signal in accordance with the input data, and therefore the control circuit 15 may fail to have a similar function to the code signal generator circuit 5 in the construction of Fig. 11. In Fig. 15, the output signal of the amplifier 9 is a reproduction output of the signal recorded in the magnetic disc 13, and therefore a mixture of a frequency-multiplied code signal and a picture signal. This frequency-multiplied code signal, after being amplified at an amplifier 111, is selectively separated from the frequency-multiplied picture signal at a filter 112, followed by the detection at a detector 113. The output signal of the detector 113 thus takes substantially the same waveform as the output signal of the shift register 53 in Fig. 14. In a decoding circuit 114, the code signal decoding data set in advance in a ROM 116 corresponding to the ROM 50 in Fig. 13 is compared with the output signal of the detector 113 thereby to decode the data in the form of code signal. In this case, the ROM 116 is addressed by a counter 115 which is reset by the vertical sync signal reproduced at a sync separator circuit 12 for counting the horizontal sync signal ..... the vertical sync signal and the horizontal sync signal being applied to terminals 121 and 122 respectively ......, and therefore it is possible to decode the output signal of the detector 113 in a multiplied time sequence. Since the code signal reproduction circuit 11 shown in Fig. 15 has the function to generate a signal for referring to the code signal required for reproduction in accordance with the data applied to the ROM 116, the control circuit 15 may fail to have a similar function incorporated in the code signal reproduction circuit 11 in the construction of Fig. 11.

Numeral 117 in Fig. 15 designates a signal-absence detector circuit. This signal-absence detector circuit 117 includes an amplitude detector and a threshold amplifier for detecting the absence of the output signal of the filter 112, that is, the output signal level of the detector 113 extremely lower than a predetermined level for normal reproduction of the code signal with the result that only noise is being received. As long as the code signal is normally reproduced, therefore, the signal-absence detector circuit 117 does not perform the function thereof, while in the case where the code signal fails to be reproduced normally, the signal absence is transmitted to the control circuit 15 through the terminal 152 thereby to set the control circuit 15 to a predetermined state. Specifically, when the field/frame change-over indication bit for code signal represents a signal absence, the control circuit 15 sets the head drive unit 7 or the demodulator circuit 10 to field reproduction or frame reproduction mode. In this case, the setting to field reproduction mode is desirably predetermined. This is by reason of the fact that even when the picture reproduced is a frame picture, the picture displayed through the terminal 101 is a reproduced picture only with a decreased vertical resolution, and therefore the loss thereof is not great. In the case where the setting to frame reproduction mode is predetermined in the absence of a field/frame change-over indication bit, on the other hand, the picture reproduced at the time is a double superimposition of field pictures of different scenes, thus greatly deteriorating the reproduced picture quality. Further, in the absence of a signal representing the track number indication bit or clock indication bit of the code signal, the control circuit 15 is required to perform a predetermined control operation to fulfil the convenience of the designer of the electronic camera system in accordance with the respective conditions. In a most realistic case, the control circuit 15 is required to be designed to totally ignore the data bits supplied from the terminal 152. In view of the fact that the on-off keying modulation system is employed as an example of modulation of the code signal as explained with reference to Figs. 14 and 15, the signal-absence condition detector circuit 117 functions to be turned off in the absence of the signal. This function is similar to that of code signal reproduction performed by the combination the detector circuit 113 and the decoding circuit 114, and therefore may be considered not very valuable. In the case where another system of modulation of the code signal, such as the FM mode modulation for alternating between two types of oscillation frequencies or the phase modulation for changing the phase of the signal of the same frequency is used, however, the function of the signal-absence condition detector circuit 117 is quite different from that of the detector 113 and therefore is valuable as will be understood. In the case where the FM mode modulation system is used as the code signal modulation system, the oscillator 54, electronic switch 55 and the detector 113 in Figs. 14 and 15 are of course replaced by an oscillator for oscillating two types of oscillation frequencies, an electronic switch for switching the two frequencies as an output and a frequency detector respectively. Similarly, when the phase modulation system is used for code signal modulation, on the other hand, the oscillator 54, the electronic switch 55 and the detector 113 in Figs. 14 and 15 are of course replaced with an oscillator for producing two phases at the same time, an electronic switch for producing an output by changing the phases, and a phase detector respectively.

The construction of the electronic camera according to a further embodiment of the present invention is shown in the block diagram of Fig. 16. The construction shown in Fig. 16 is substantially the same as that of the electronic camera explained with reference to Fig. 3, except that the construction of Fig. 16 additionally includes a detector 41. The detector 41 is the same as the detector 41 for detecting the presence or absence of the lug 42 of the cassette 40 of the conventional electronic camera explained with reference to Figs. 1 and 2.

The operation of the electronic camera shown in Fig. 16 is identical with that of the electronic camera explained with reference to Fig. 3 except that the detector 41 is additionally provided as mentioned above. Therefore, the explanation below will be limited to the construction and operation related to the detector 41. The feature of the construction of Fig. 16 is the compatibility with the magnetic disc 13 recorded with signals by the conventional electronic camera and the cassette 40 containing the magnetic disc in addition to all the advantages of the conventional electronic camera shown in Figs. 1a and 1b. Explanation will be made below with reference to the combination table of Fig. 17. Laterally in Fig. 17, columns (I) to (VI) indicate, as shown, the state of the lug 42 of the cassette 40 used for recording and reproduction, the construction of the electronic camera used for recording and so on, while vertically, columns (a) to (l) represent the state of the lug of the cassette 40, the construction of the electronic camera used for recording, and the construction of the electronic camera used for reproduction from the cassette containing the recorded data. The column (VI) contains a circle indicating normal reproduction of the picture, that is, field reproduction of a field-recorded picture and frame reproduction of a frame-recorded picture, and a triangle indicating an abnormal reproduction, that is, the reverse case. It will be seen from Fig. 17 that among the 12 combinations (a) to (l), abnormal reproduction is observed only in (c) and (g). Of these conditions, (c) shows the case in which, with the lug 42 of the cassette 40 indicating the frame recording, the field picture is recorded by the electronic camera of Fig. 16 and the cassette 40 thus recorded is reproduced by the conventional electronic camera constructed. as shown in Fig. 1. In this case, since the lug 42 indicates frame reproduction, a pair of field pictures are reproduced and superimposed on the monitor screen. A normal reproduced picture is obtained by another reproduction operation with the lug 42 of the cassette 40 torn off or bent. The other case (g) of abnormal reproduction occurs when a recorded frame picture is reproduced from a pair of independently recorded field pictures as obvious from the drawing. In this case, a pair of substantially the same reproduced pictures are obtained successively, thus offering no practical inconvenience. In other words, the construction of the electronic camera shown in Fig. 16 permits compatibility with the method of switching between field and frame and detection of the conventional electronic camera. The reasons why this compatibility is obtained, is explained below. In the construction of Fig. 16, the field/frame change-over signal is provided as a digital code signal which is data "11" for field picture, data "10" or "01" for frame picture each including at least a bit "1" indicating the carrier wave. When data "1" representing the carrier wave is detected, it indicates that the electronic camera used for recording has the function of recording the digital code signal, in which case the digital code is reproduced in priority. If the data "00" indicating the absence of the carrier wave is detected, by contrast, the lack of the function of recording the digital code by the electronic camera used from recording is indicated, in which case frame or field reproduction is identified by detecting the lug condition. As a result, the field/frame writing and reproduction for recording and reproduction correspond to each other, one to one. In the embodiment of Fig. 16, in addition to the lug detector 41, another branch RAM 4 = 00 is added to the first branching decision (b) in the flowchart of Fig. 13 of the microcomputer making up the control circuit 15. Further, a second branching decision point responsive to the detection signal produced from the lug-condition detector 41 forward of the first branching path is provided, so that upon detection of the presence of the lug at the second branching decision after detection of RAM 4 = 00, the process is passed to (d), while upon detection of the absence of the lug, the process branches to (c) for reproduction of frame or field picture. In the process, tracks 2n-l and 2n (n: integral number) are of course used as a track pair for frame reproduction.

Unlike in the present embodiment in which the construction of the electronic still picture camera includes one head for recording and reproduction operations so that the head 8 is driven by the head drive unit 7 to select the track for each vertical sync for frame reproduction, two heads may alternatively be used for simultaneous tracing of two tracks with equal effect. In this case, the first field signal is detected by the first head and the second field signal by the second head. The two heads are fixed on a single head assembly and controlled by the control circuit 15.

Further, the data contained in the digital code signal may of course take a binary number or other special code instead of a binary-coded decimal number. Also, the digital code signal may be constructed of any data other than the track number or date as used in the embodiments mentioned above. In addition, the length of a bit may be a fraction of an integral number or an integral multiple of horizontal period such as 1 or 4 horizontal periods or a mixture thereof. Furthermore, the starting point of the digital code signal may be located at any point within the vertical sync period as long as it is in synchronism with the vertical sync signal.

As a modulation system, the on-off keying system for carrier wave may be replaced with equal effect by the frequency keying system in which two carrier wave frequencies are switched in accordance with the digital code signal.

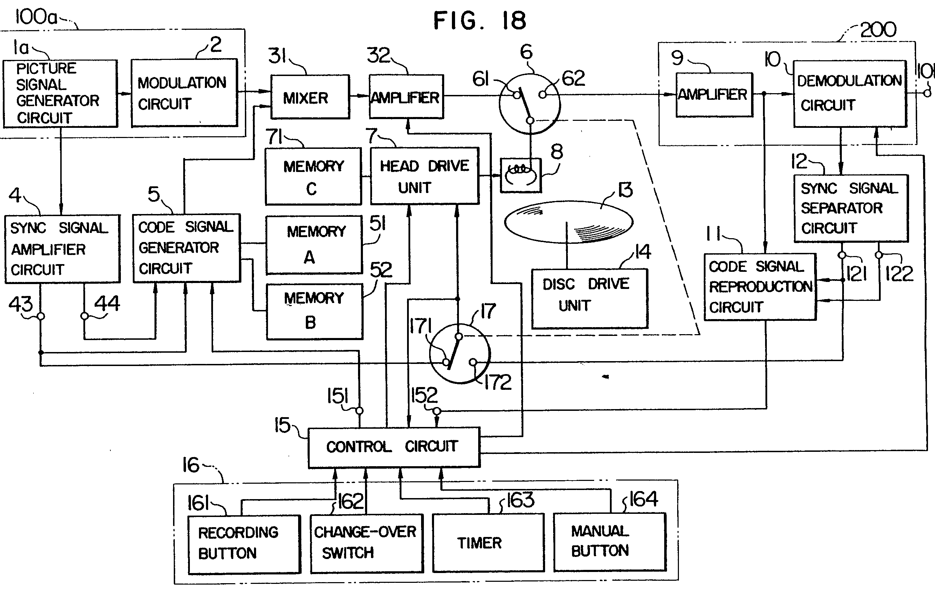

A fourth embodiment of the present invention is shown in Fig. 18. In this embodiment, the electronic camera 100 in the embodiment of Fig. 16 is replaced by a picture signal generator 100a, and the image pick-up circuit 1 by a picture signal generator circuit 1a. The picture signal generator circuit 1a generates a picture signal like the image pick-up circuit 1. The picture signal generator 100a includes for example a television receiver, VTR, optical video disc player, a personal computer or the like. Of the picture signals generated by these devices, the signal for one frame or one field is recorded on the disc 13. Also in this embodiment, the code signal is superimposed on the picture signal as in the first embodiment.

It will be understood from the foregoing description that according to the present invention a picture signal and data functionally required or required for an improved function are capable of being recorded and reproduced on the same track with a simple circuit configuration, thus providing an electronic still picture photography system which is compact, light in weight and low in cost and high in performance and function with great effect.

## Claims

1. An electronic still picture photography system comprising:

(a) an electronic camera (100) including an image pick-up circuit (1) for converting an optical image into a picture signal and a modulation circuit (2) for generating a modulated picture signal which is modulated by the picture signal produced from said image pick-up circuit;

(b) a magnetic recording medium (13) including a plurality of magnetic tracks formed thereon;

(c) a magnetic head (8) arranged adjacent to said magnetic recording medium and selectively connected to said modulation circuit of said electronic camera, said magnetic head being supplied with said modulated picture signal produced from said modulation circuit, said modulated picture signal being converted into a magnetic signal, said magnetic signal being recorded on a magnetic track on said magnetic recording medium, said magnetic head detecting the magnetic signal as required which is recorded on said magnetic recording medium;

(d) a magnetic recording medium drive unit (14) for rotating said magnetic recording medium at a predetermined velocity;

(e) a mode input device (16) at least including a recording button (161) for instructing said magnetic recording medium to record the magnetic signal corresponding to said optical image and a manual button (164) for selectively indicating the magnetic track formed on said magnetic recording medium;

(f) a control circuit (15) connected to said mode input device for generating a code signal corresponding to the data representing the conditions of said recording button and said manual button;

(g) a sync signal amplifier circuit (4) connected to said image pick-up device of said electronic camera for amplifying a sync signal supplied from said image pick-up device;

(h) a code signal generator circuit (5) connected to said sync signal amplifier circuit and said control circuit, said code signal generator circuit being supplied with the sync signal from said sync signal amplifier circuit and a code signal from said control circuit, said code signal generator converting the code signal into a sync code signal in synchronism with said sync signal, said code signal generator circuit generating a modulated code signal which is modulated by the converted code signal;

(i) a mixer circuit (31) inserted between said modulation circuit of the electronic camera and said magnetic head and connected to said code signal generator circuit for mixing the modulated code signal which is generated by said code signal generator circuit with the modulated picture signal supplied from said modulation circuit;

(j) a magnetic head drive unit (7) connected to said control circuit and holding said magnetic head, said magnetic head drive unit being supplied with the code signal from said control circuit, said head drive unit moving said magnetic head onto a required magnetic track in accordance with the supplied code signal;

(k) an amplifier circuit (32) connected selectively to said magnetic head for amplifying the modulated code signal and the modulated picture signal detected by said magnetic head from said magnetic recording medium;

(l) a demodulation circuit (10) connected to said amplifier circuit for converting said modulated picture signal into a demodulated picture signal;

(m) a sync signal separator circuit (12) connected to said demodulation circuit for separating the sync signal from the demodulated picture signal supplied thereto; and

(n) a code signal reproduction circuit (11) connected to said amplifier circuit and said sync signal separator circuit and supplied with a modulated code signal from said amplifier circuit, said code signal reproduction circuit demodulating said modulated code signal into a code signal and supplying said demodulated code signal to said control circuit.

2. An electronic still picture photography system according to Claim 1, wherein a one-bit data length of the code signal generated by said code signal generator circuit is selected to be a time length n times (n: integral number) a period of the horizontal sync signal.

3. An electronic still picture photography system according to Claim 2, wherein said integral number n is four.

4. An electronic still picture photography system according to Claim 1, wherein a frequency of the modulated code signal generated by said code signal generator circuit is 13 times a frequency of the horizontal sync signal.

5. An electronic still picture photography system according to claim 1 in which said mode input device (16) further includes a change-over switch (162) at least for switching between a first state in which the magnetic signal corresponding to one optical image to be recorded on the magnetic recording medium is recorded on a pair of first and second tracks as a frame signal and a second state in which the magnetic signal corresponding to one optical image to be recorded is recorded on one magnetic track as a field signal, and said code signal generated by said control circuit (15) corresponds to the data representing the conditions of said recording button, said change-over switch and said manual button respectively.

6. An electronic still picture photography system according to Claim 5, wherein among the data generated by said control circuit, the data corresponding to the conditions of said change-over switch are 2-bit data, said data being a first data "10" of the frame signal indicating the first magnetic track and a second data "20" thereof indicating the second magnetic track under the first state of said change-over switch of said mode input device, said data being a data "11" under the second state of said change-over switch.

**Patentansprüche**

1. Elektronisches Einzelbild-Photographiesystem, umfassend:

(a) eine elektronische Kamera (100), die aufweist eine Abbildungs-Abtastschaltung (1) zum Umwandeln einer optischen Abbildung in ein Bildsignal und eine Modulationsschaltung (2) zum Erzeugen eines modulierten Bildsignales, welches durch das von der Abbildungs-Abtastschaltung erzeugte Bildsignal moduliert ist;

(b) ein magnetisches Aufzeichnungsmedium (13), das eine Vielzahl von magnetischen Spuren aufweist, die darauf ausgebildet sind;

(c) ein Magnetkopf (8), der in der Nachbarschaft zu dem magnetischen Aufzeichnungsmedium angeordnet ist und wahlweise mit der Modulationsschaltung der elektronischen Kamera verbunden ist, wobei dem Magnetkopf das von der Modulationsschaltung erzeugte, modulierte Bildsignal zugeführt wird, wobei das modulierte Bildsignal in ein magnetisches Signal umgewandelt wird, wobei das magnetische Signal auf einer Magnetspur des magnetischen Aufzeichnungsmediums aufgezeichnet wird, wobei der Magnetkopf das magnetische Signal nach Erfordernis erfaßt, welches auf dem magnetischen Aufzeichnungsmedium aufgezeichnet ist;

(d) eine Antriebseinheit (14) des magnetischen Aufzeichnungsmediums zum Drehen des magnetischen Aufzeichnungsmediums mit einer vorbestimmten Geschwindigkeit;

(e) eine Moduseingabeeinrichtung (16), die zumindest aufweist einen Aufzeichnungsknopf (161) zum Anweisen des magnetischen Aufzeichnungsmediums, das magnetische Signal entsprechend der optischen Abbildung aufzuzeichnen und einen Handknopf (164) zum wahlweisen Anzeigen der magnetischen Spur, die auf dem magnetischen Aufzeichnungsmedium ausgebildet ist;

(f) eine Steuerschaltung (15), die mit der Moduseingabeeinrichtung verbunden ist zum Erzeugen eines Codesignals, welches den Daten entspricht, die die Zustände des Aufzeichnungsknopfes und des Handknopfes wiedergeben;

(g) eine Synchronsignal-Verstärkerschaltung (4), die mit der Abbildungsabtasteinrichtung der elektronischen Kamera verbunden ist zum Verstärken eines Synchronsignals, welches von der Abbildungsabtasteinrichtung zugeführt wird;

(h) eine Codesignal-Generatorschaltung (5), die mit der Synchronsignal-Verstärkerschaltung und der Steuerschaltung verbunden ist, wobei die Codesignal-Generatorschaltung mit dem Synchronsignal von der Synchronsignal-Verstärkerschaltung und einem Codesignal von der Steuerschaltung versorgt wird, wobei der Codesignal-Generator das Codesignal in ein Synchroncodesignal in Synchronismus mit dem Synchronsignal umwandelt, wobei die Codesignal-Generatorschaltung ein moduliertes Codesignal erzeugt, welches durch das umgewandelte Codesignal moduliert wird;

(i) eine Mischerschaltung (31), die zwischen der Modulationsschaltung der elektronischen Kamera und dem Magnetkopf eingefügt ist und mit der Codesignal-Generatorschaltung verbunden ist zum Mischen des modulierten Codesignals, welches von der Codesignal-Generatorschaltung erzeugt ist, mit dem von der Modulationsschaltung zugeführten modulierten Bildsignal;

(j) ein Magnetkopf-Antriebseinheit (7), die mit der Steuerschaltung verbunden ist und den Magnetkopf hält, wobei die Magnetkopf-Antriebseinheit mit dem Codesignal von der Steuerschaltung versorgt wird, wobei die Kopf-Antriebseinheit den Magnetkopf auf eine angeforderte Magnetspur in Übereinstimmung mit dem zugeführten Codesignal bewegt;

(k) eine Verstärkerschaltung (32), die wahlweise mit dem Magnetkopf zum Verstärken des modulierten Codesignals und des modulierten Bildsignals verbunden ist, welches von dem Magnetkopf von dem magnetischen Aufzeichnungsmedium detektiert wird;

(l) eine Demodulationsschaltung (10), die mit der Verstärkerschaltung verbunden ist zum Umwandeln des modulierten Bildsignals in ein demoduliertes Bildsignal;

(m) eine Synchronsignal-Trennschaltung (12), die mit der Demodulationsschaltung verbunden ist zum Trennen des Synchronsignals von dem dieser zugeführten, demodulierten Bildsignal; und

(n) eine Codesignal-Wiedergabeschaltung (11), die mit der Verstärkerschaltung und der Synchronsignal-Trennschaltung verbunden ist und der ein moduliertes Codesignal von der Verstärkerschaltung zugeführt wird, wobei die Codesignal-Wiedergabeschaltung das modulierte Codesignal in ein Codesignal demoduliert und das demodulierte Codesignal der Steuerschaltung zuführt.

2. Elektronisches Einzelbild-Photographiesystem nach Anspruch 1, wobei eine Ein-Bit-Datenlänge des Codesignals, welches von der Codesignal-Generatorschaltung erzeugt wird, zu einer Zeitlänge gewählt wird, die dem n-fachen (n: eine Integerzahl) einer Periode des Horizontal-Synchronsignals entspricht.

3. Elektronisches Einzelbild-Photographiesystem nach Anspruch 2, wobei die Integerzahl n vier ist.

4. Elektronisches Einzelbild-Photographiesystem nach Anspruch 1, wobei eine Frequenz des von der Codesignal-Generatorschaltung erzeugten, modulierten Codesignals dem 13-fachen einer Frequenz des Horizontal-Synchronsignals entspricht.

5. Elektronisches Einzelbild-Photographiesystem nach Anspruch 1, wobei die Moduseingabeeinrichtung (16) weiterhin aufweist einen Umschaltschalter (162), der zumindestens zum Umschalten zwischen einem ersten Zustand, in dem das Magnetsignal, das einer auf das magnetische Aufzeichnungsmedium aufzuzeichnenden optischen Abbildung entspricht, auf ein Paar einer ersten und einer zweiten Spur als ein Rahmensignal aufgezeichnet wird, und einem zweiten Zustand, in dem das magnetische Signal, welches einer aufzuzeichnenden optischen Abbildung entspricht, auf einer Magnetspur als ein Halbbildsignal aufgezeichnet wird, und wobei das von der Steuerschaltung (15) erzeugte Codesignal den Daten entspricht, die die Zustände des Aufzeichnungsknopfes, des Umschaltschalters bzw. des Handknopfes wiedergibt.

6. Elektronisches Einzelbild-Photographiesystem nach Anspruch 5, wobei unter den von der Steuerschaltung erzeugten Daten die Daten, die die Zustände des Umschaltschalters representieren, 2-Bit-Daten sind, wobei die Daten beim ersten Zustand des Umschaltschalters der Moduseingabeeinrichtung erste Daten mit "10" des Rahmensignals, das die erste Magnetspur anzeigt, und zweite Daten "20" desselben sind, das die zweite Magnetspur anzeigt, und wobei die Daten im zweiten Zustand des Umschaltschalters Daten mit "11" sind.

**Revendications**

1. Systéme de photographie électronique d'images fixes, comprenant:

(a) une caméra électronique (100) incluant un circuit (1) de détection d'images servant à convertir une image optique en un signal d'image et un circuit de modulation (2) servant à produire un signal d'image modulé, qui est modulé par le signal d'image produit par ledit circuit de détection d'images;

(b) un support d'enregistrement magnétique (13) incluant une pluralité de pistes magnétiques formées sur ce support;

(c) une tête magnétique (8) disposée au voisinage dudit support d'enregistrement magnétique et raccordée de façon sélective audit circuit de modulation de ladite caméra électronique, ladite tête magnétique étant alimentée par ledit signal modulé produit par ledit circuit de modulation, ledit signal d'image modulé étant converti en un signal magnétique, ledit signal magnétique étant enregistré sur une piste magnétique sur ledit support d'enregistrement magnétique, ladite tête magnétique détectant, comme cela est nécessaire, le signal magnétique qui est enregistré sur ledit support d'enregistrement magnétique;

(d) une unité (14) d'entraînement du support d'enregistrement magnétique, servant à faire tourner ledit support d'enregistrement magnétique à une vitesse prédéterminée;

(e) un dispositif (16) d'entrée de modes, comprenant au moins un bouton d'enregistrement (161) servant à commander ledit support d'enregistrement magnétique pour l'enregistrement du signal magnétique correspondant à ladite image optique, et un bouton manuel (164) pour indiquer de façon sélective la piste magnétique formée sur ledit support d'enregistrement magnétique;

(f) un circuit de commande (15) raccordé audit dispositif d'entrée de modes pour produire un signal de code correspondant aux données représentant les conditions dudit bouton d'enregistrement et dudit bouton manuel;

(j) un circuit (4) d'amplification du signal de synchronisation, raccordé audit dispositif de détection d'images de ladite caméra électronique pour amplifier un signal de synchronisation délivré par ledit dispositif de détection d'images;

(h) un circuit (5) formant générateur d'un signal de code, raccordé audit circuit d'amplification du signal de synchronisation et audit circuit de commande, ledit circuit formant générateur du signal de code étant alimenté par le signal de synchronisation délivré par ledit circuit d'amplification du signal de synchronisation et par un signal de code délivré par ledit circuit de commande, ledit générateur du signal de code convertissant le signal de code en un signal de code de synchronisation en synchronisme avec ledit signal de synchronisation, ledit circuit formant générateur du signal de code produisant un signal de code modulé, qui est modulé par le signal de code converti;

(i) un circuit mélangeur (31) inséré entre ledit circuit de modulation de la caméra électronique et ladite tête magnétique et raccordé audit circuit formant générateur du signal de code pour mélanger le signal de code modulé, qui est produit par ledit circuit formant générateur du signal de code, et le signal d'image modulé délivré par ledit circuit de modulation;

(j) une unité (7) d'entraînement de la tête magnétique, raccordée audit circuit de commande et maintenant ladite tête magnétique, ladite unité d'entraînement de la tête magnétique étant alimentée par le signal de code délivré par ledit circuit de commande, ladite unité d'entraînement de la tête déplaçant ladite tête magnétique sur une piste magnétique requise, conformément au signal de code envoyé;

(k) un circuit amplificateur (32) raccordé de façon sélective à ladite tête magnétique pour amplifier le signal de code modulé et le signal d'image modulé détecté par ladite tête magnétique à partir dudit support d'enregistrement magnétique;

(l) un circuit de démodulation (10) raccordé audit circuit amplificateur pour convertir ledit signal d'image modulé en un signal d'image démodulé;

(m) un circuit (12) de séparation du signal de synchronisation, raccordé audit circuit de modulation pour séparer le signal de synchronisation du signal d'image démodulé, qui lui est envoyé; et

(n) un circuit (11) de reproduction du signal de code, raccordé audit circuit d'amplification et audit circuit de séparation du signal de synchronisation et alimenté par un signal de code modulé délivré par ledit circuit amplificateur, ledit circuit de reproduction du signal de code démodulant ledit signal de code modulé, en un signal de code et envoyant ledit signal de code démodulé audit circuit de commande.

2. Système de photographie électronique d'images fixes selon la revendication 1, dans lequel une longueur de données d'un bit du signal de code produit par ledit circuit formant générateur du signal de code est choisie égale à une durée égale à n (n: nombre entier) fois une période du signal de synchronisation horizontale.

3. Système de photographie électronique d'images fixes selon la revendication 2, dans lequel ledit nombre entier n est égal à quatre.

4. Système de photographie électronique d'images fixes selon la revendication 1, dans lequel une fréquence du signal de code modulé, produit par ledit circuit formant générateur du signal de code, est égale à 13 fois une fréquence du signal de synchronisation horizontale.

5. Système de photographie électronique d'images fixes selon la revendication 1, dans lequel ledit dispositif (16) d'entrée de modes inclut en outre un commutateur (162) servant au moins à réaliser une commutation entre un premier état, dans lequel le signal magnétique correspondant à une image optique devant être enregistrée sur le support d'enregistrement magnétique est enregistré sur un couple de première et seconde pistes sous la forme d'un signal de trame, et un second état, dans lequel le signal magnétique correspondant à une image optique devant être enregistrée est enregistré sur une piste magnétique en tant que signal d'image, et ledit signal de code produit par ledit circuit de commande (15) correspond aux données représentant respecti vement les conditions dudit bouton d'enregistrement, dudit commutateur et dudit bouton manuel.

6. Système de photographie électronique d'images fixes selon la revendication 5, dans lequel, parmi les données produites par ledit circuit de commande, les données correspondant aux conditions dudit commutateur sont des données à 2 bits, lesdites données incluant une première donnée "10" du signal de trame indiquant la première piste magnétique et une seconde donnée "20" de ce signal indiquant la seconde piste magnétique, dans le premier état dudit commutateur dudit dispositif d'entrée de modes, ladite donnée étant une donnée "11" dans le second état dudit commutateur.

## FIG. 1a PRIOR ART

100

110
IMAGE PICK-UP DEVICE

120
MODULATION DEVICE FOR RECORDING

130

13

41

## FIG. 1b PRIOR ART

13

250
DEMODULATION DEVICE FOR REPRODUCTION

700
MONITOR

260

200

41

## FIG. 2 PRIOR ART

13

40

42

1

FIG. 3

**FIG. 4**

(a) | 1 | 2 | 3 | 4 | 5 | ... | 12 | 13 | 14 | 15 |

(b) (empty)

(c) #1 #2 #3 #4 #5 #6 #7 #8 ... #16 #17 #18 #19 #20 #21

(d) FA FB Fi Fi FA FB FA FB ... Fi FA FB Fi FA FB

(e) 1 2 3 4 5 6 7 8 ... 16 17 18 19 20 21

(f) $M_1$ $M_1$ $M_2$ $M_3$ $M_4$ $M_4$ $M_5$ $M_5$ ... $M_{12}$ $M_{13}$ $M_{13}$ $M_{14}$ $M_{15}$ $M_{15}$

(g) $V_{1a}$ $V_{1b}$ $V_2$ $V_3$ $V_{4a}$ $V_{4b}$ $V_{5a}$ $V_{5b}$ ... $V_{12}$ $V_{13a}$ $V_{13b}$ $V_{14}$ $V_{15a}$ $V_{15b}$

**FIG. 5**

(a) #1 #2 #3 #4 #5 #6 #7 #8 ... #16 #17 #18 #19 #20 #21

(b) 1 3 4 6 7 ... 16 17 19 20

(c) (empty)

(d) $M_1$ $M_2$ $M_3$ $M_4$ $M_5$ ... $M_{12}$ $M_{13}$ $M_{14}$ $M_{15}$

(e) $V_{1a}$ $V_{1b}$ $V_2$ $V_3$ $V_{4a}$ $V_{4b}$ $V_{5a}$ $V_{5b}$ ... $V_{12}$ $V_{13a}$ $V_{13b}$ $V_{14}$ $V_{15a}$ $V_{15b}$

EP 0 105 213 B1

# FIG. 6

(A)

$t_0$

(B)   1 2 3 4 5 6 7 8 9 10 11 12 · · · 262 263 264

(C)   1 1 1 0 0 0 1 0 0 0 0 1 0 0 1 0

|←——— (a) ———→|←(b)→|←——— (c) ———→|—|← (a) →|

(D)

(E)

(a)(b) (c) (d) (e) (f) (g) (h) (i)      (a)

# FIG. 7

SIGNAL AMPLITUDE

(a)   (b) (c)   (d)   (e)

0.2   1.2 1.3   6.0   7.5

FREQUENCY   [MHz]

4

FIG. 8

(A)

(B) 1234··                                              ···264···

(C)  0  I  0  I   0   I   0  I  0      0  I

|———(a)———|———(b)———|———(c)—//—|———(a)

FIG. 9

(A)

(B)

(C) I 2 3 4 5 6 7 8 9 I0 II I2  I3  I4 ···          ···273···

(D)  III 000I 0000 I  0  0                          I I

|———(a)———|—(b)—|———(c)———//———————|—(a)

FIG. I0

I5

I54
ROM                    TO EACH
                       INPUT-OUTPUT
                       TERMINAL

I53                I55      I56
INPUT-OUTPUT   CPU     RAM
DEVICE

FIG. 11

START 1

SET TRACK NUMBER MEMORY TO 1

DETECT OPERATION OF RECORDING
BUTTON 161

DETECT THE STATE OF FIELD/FRAME CHANGE-
OVER SWITCH

STORE DATA "11" IN RAM 1 FOR FIELD RECORDING
AND DATA "01" IN RAM 1 AND "10" IN RAM 2 FOR
FRAME RECORDING

INPUT TIME FROM TIMER 163
AND STORE IN RAM 3

TRANSFER DATA IN RAM TO CODE SIGNAL
RECORDING CIRCUIT 5

STORE DATA OF RAM 1, TRACK NUMBER MEMO-
RY AND DATA OF RAM 3 FOR FIELD PICTURE;
AND STORE DATA OF RAM 1, TRACK NUMBER
MEMORY AND DATA OF RAM 3, DATA OF RAM 2,
TRACK NUBER MEMORY AND DATA OF RAM 3
FOR FRAME PICTURE IN MEMORIES A AND B OF
CODE SIGNAL RECORDING CIRCUIT 5

ADD DATA "1" TO DATA OF TRACK
NUMBER MEMORY FOR FIELD PICTURE
AND DATA "2" FOR FRAME PICTURE

STORE DATA OF RAM 1 IN
MEMORY C OF DRIVE UNIT 7

CODE SIGNAL RECORDING CIRCUIT 5
RECORDS CODE SIGNAL MULTIPLE WAY

SHIFT HEAD 8 TO THE NEXT HIGHER
TRACK

# FIG. 12

START(a)

DETECT VERTICAL
SYNC SIGNAL

MEMORY
C = 11

C = ?

MEMORY
C = 01

PRODUCE DATA OF
MEMORY A

PRODUCE DATA OF
MEMORY A

DETECT NEXT VERTICAL
SYNC SYGNAL

SHIFT HEAD 8 TO NEXT
HIGHER TRACK

PRODUCE DATA OF
MEMORY B

END (a)

# FIG. 13

START 2

SET TRACK NUMBER MEMORY TO 0

DETECT OPERATION OF SHIFT BUTTON 164

SHIFT HEAD 8 TO NEXT HIGHER TRACK

DETECT THE RECORDED DIGITAL CODE SIGNAL FROM CODE SIGNAL REPRODUCTION CIRCUIT

STORE 2-BIT DATA OF DIGITAL CODE SIGNAL (b) OF FIG.6 IN RAM 4 OF CONTROL CIRCUIT 15

RAM 4 = 11    RAM 4 = ?    RAM 4 = 01
b

RAM 4 = 10

SHIFT HEAD 8 TO NEXT LOWER TRACK

~c

~d

ADD "1" TO TRACK NUMBER MEMORY

ADD "2" TO TRACK NUMBER MEMORY

STORE DATA "01" IN THE MEMORY OF DRIVE UNIT 7

FIELD REPRODUCTION PROCESS

FRAME REPRODUCTION PROCESS

8

# FIG. 14

# FIG. 15

# FIG. 16

EP 0 105 213 B1

# FIG. 17

| STATE OF LUG 42 | ELECTRONIC CAMERA CONFIGURATION USED FOR RECODING | STATE OF FIELD / FRAME CHANGE-OVER SWITCH 162 | PICTURE RECORDED ON DISC 13 | ELECTRONIC CAMERA CONFIGURATION USED FOR REPRODUCTION | NORMALITY OF REPRODUCED PICTURE | |
|---|---|---|---|---|---|---|
| PRESENCE (FRAME RECORDING) | FIG. 16 | FRAME | FRAME | FIGs. 1a and 1b | O | ~a |
| | | | FRAME | FIG. 16 | O | ~b |
| | | FIELD | FIELD | FIGs. 1a and 1b | △ | ~c |
| | | | FIELD | FIG. 16 | O | ~d |
| | FIG. 1a and 1b | | FRAME | FIGs. 1a and 1b | O | ~e |
| | | | FRAME | FIG. 14 | O | ~f |
| | | | | | | |
| | | | | | | |
| ABSENCE (FIELD RECORDING) | FIG. 16 | FRAME | FRAME | FIGs. 1a and 1b | △ | ~g |
| | | | FRAME | FIG. 16 | O | ~h |
| | | FIELD | FIELD | FIGs. 1a and 1b | O | ~i |
| | | | FIELD | FIG. 16 | O | ~j |
| | FIGs. 1a and 1b | | | | | |
| | | | FIELD | FIGs. 1a and 1b | O | ~k |
| | | | FIELD | FIG. 16 | O | ~ℓ |

(I)     (II)     (III)     (IV)     (V)     (VI)

EP 0 105 213 B1

FIG. 18